Europäisches Patentamt

**European Patent Office**

Office européen des brevets

(19)

(11) Veröffentlichungsnummer: **0 279 302**
**B1**

(12) **EUROPÄISCHE PATENTSCHRIFT**

(45) Veröffentlichungstag der Patentschrift:
**08.08.90**

(51) Int. Cl.⁵: **F28D 20/00,** F28D 15/02,
F28F 13/14

(21) Anmeldenummer: **88101733.9**

(22) Anmeldetag: **06.02.88**

(54) Schichtwärmespeicher.

(30) Priorität: **18.02.87 DE 3705103**

(43) Veröffentlichungstag der Anmeldung:
**24.08.88 Patentblatt 88/34**

(45) Bekanntmachung des Hinweises auf die Patenterteilung:
**08.08.90 Patentblatt 90/32**

(84) Benannte Vertragsstaaten:
**AT DE ES FR IT**

(56) Entgegenhaltungen:
**DE-A- 2 926 960
DE-C- 556 739
FR-A- 2 558 245**

**PATENT ABSTRACTS OF JAPAN, Band 6,
Nr. 172 (M-154)[1050], 7. September 1982; &
JP-A-57 84 988 (NIPPON DENKI K.K.) 27-05-1985**

(73) Patentinhaber: **Deutsche Forschungsanstalt für Luft-
und Raumfahrt e.V., Linder Höhe Postfach 90 60 58,
D-5000 Köln 90(DE)**

(72) Erfinder: **Lindner, Friedrich, Dr., Dipl.-Phys.,
Hirschsprung 13, D-7000 Stuttgart 80(DE)**
Erfinder: **Tattermusch, Peter, Tübinger Strasse 57,
D-7030 Böblingen(DE)**

(74) Vertreter: **Hoeger, Stellrecht & Partner,
Uhlandstrasse 14 c, D-7000 Stuttgart 1(DE)**

**Beschreibung**

Die Erfindung betrifft einen Schichtwärmespeicher mit einem Behälter, der mindestens eine Zuleitung und eine Ableitung für ein flüssiges Wärmespeichermedium aufweist und mit mindestens einer in den Behälter hineinragenden Heatpipe ausgerüstet ist, deren Wärmeabgabewand sich mindestens über einen Teil der Behälterhöhe erstreckt und dadurch mehrere Temperaturschichten durchsetzt.

Um bei Wärmespeichern mit flüssigem Wärmespeichermedium, beispielsweise bei Warmwasserspeichern, die Energieverluste kleinzuhalten, die durch die Mischung der heißen und der kalten Speichermedienanteile auftreten, ist es bekannt, diese Speicher als Schichtspeicher auszubilden. Dabei wird die unten eingeführte kalte Flüssigkeit im Behälter beim Aufsteigen aufgewärmt.

Es sind auch Vorrichtungen bekannt, die zum Beispiel zuzulaufendes Wasser aus Solaranlagen je nach Temperatur in eine Schicht des Warmwasserspeichers einspeisen, in der die gleiche Temperatur herrscht. Um eine solche Einspeisung zu erreichen, wird der Wärmespeicher selbst durch wärmeisolierende Schichten in einzelne Bereiche unterteilt und jedem dieser Bereiche wird eine eigene Heatpipe zugeordnet, wobei jede dieser Heatpipes bei der bekannten Anordnung als Wärmegleichrichter wirkt und nur Wärme aus dem zuführenden Medium zum Speichermedium transportieren soll (DE-A 2 926 960). Allerdings ergibt sich dabei ein großer konstruktiver Aufwand, da eine größere Anzahl von Heatpipes verwendet werden müssen. Außerdem ist eine Entmischung nicht zu verhindern, denn jede Heatpipe kann längs der Wärmeabgabefläche, die gut wärmeleitend ausgebildet ist, Wärme aus dem Speicher in die zuführende Flüssigkeit übertragen, sobald die zuführende Flüssigkeit eine niederere Temperatur hat als die Speicherflüssigkeit. Auf diesem Weg kann ebenfalls ein Ausgleich der Temperatur zwischen den einzelnen Schichten des Speichervolumens erfolgen.

Bei anderen Vorrichtungen zur temperaturrichtigen Einspeisung von Wärme in einen Schichtwärmespeicher ist die Leistungsfähigkeit auf sehr kleine Zulaufmengen beschränkt, da die Turbulenzen und Umschichtungen im Behälter vermieden werden müssen, damit die Flächen konstanter Temperatur im Wärmespeichermedium bei Wärmezufuhr über den gesamten Querschnitt des Behälters gleichmäßig nach unten wandern.

Wird heißes Wärmespeichermedium an der Oberseite entnommen, so fließt kaltes Medium am Boden zu, so daß die Flächen konstanter Temperatur nach oben wandern. Mischungsverluste können dadurch klein gehalten werden.

Bei solchen Schichtspeichern muß in jede Schicht Wärme zugeführt werden können, und zwar mit der Temperatur, die der jeweiligen Temperatur der Schicht entspricht. Eine solche Wärmezufuhr kann mit einer in den Behälter hineinragenden Heatpipe erfolgen, die die zu übertragende Wärme an ihrem unteren Ende aus einer Wärmequelle aufnimmt und über den oberen, wärmeabgebenden Teil temperaturrichtig an die unterschiedlichen Schichten des Wärmespeichermediums im Behälter abgibt. Hierbei wird automatisch eine Zufuhr niedergrädiger Wärme in höhergrädige Speicherzonen vermieden, während Wärme einer bestimmten Grädigkeit in alle niedergrädigeren Speicherzonen eingespeist wird. Um die Wärmeabgabewand der Heatpipe entsteht eine laminare Konvektion des aufgeheizten Wärmespeichermediums, die bis unter die Schicht des Wärmespeichermediums führt, die eine höhere Temperatur als das aufsteigende Wärmespeichermedium aufweist. In diesem Bereich sammelt sich das aufgewärmte Wärmespeichermedium und bleibt bei diesem Niveau, so daß auf diese Weise unter Beibehaltung der Schichtung im Behälter die einzelnen Schichten sukzessive aufgeheizt werden können.

Schwierigkeiten ergeben sich jedoch bei dieser Konstruktion dadurch, daß die Wärmeabgabewand der Heatpipe sich über die gesamte Höhe der Heatpipe erstreckt und als metallische Wand eine Wärmeleitung von Schichten höherer Temperatur zu Schichten niedrigerer Temperatur auslöst. Dies liegt daran, daß die Wärmeabgabewand einer Heatpipe aus einem Material mit einer guten Wärmeleitfähigkeit besteht, da ein optimaler Wärmeübergang von dem im Inneren der Heatpipe kondensierenden Wärmeträgermedium in das die Heatpipe umgebende Wärmespeichermedium des Behälters erreicht werden soll. Diese Wärmeleitfähigkeit führt längs der Wärmeabgabewand der Heatpipe zu einem Temperaturausgleich zwischen den verschiedenen Schichten des Wärmespeichers und wirkt so dem gewünschten Schichtaufbau entgegen.

Es ist Aufgabe der Erfindung, einen gattungsgemäßen Schichtwärmespeicher derart zu verbessern, daß der durch die Heatpipe hervorgerufene Temperaturausgleich zwischen den auf unterschiedlichem Niveau befindlichen Schichten des Wärmespeichers weitgehend vermieden wird.

Diese Aufgabe wird bei einem Schichtspeicher der eingangs beschriebenen Art erfindungsgemäß dadurch gelöst, daß die Wärmeabgabewand der Heatpipe aus Material mit guter Wärmeleitfähigkeit besteht und mit Material mit schlechter Wärmeleitfähigkeit in mehrere Abschnitte unterteilt ist, die im Behälter auf unterschiedlicher Höhe angeordnet sind.

Die Unterteilung der Heatpipe in mehrere übereinander angeordnete Abschnitte, die durch die Zwischenlagen im Hinblick auf ihre axiale Wärmeleitung voneinander isoliert sind, führt dazu, daß zwar die Wärmeabgabewände in den unterschiedlichen Abschnitten weiterhin optimal Wärme von dem Wärmeträgermedium im Innern der Heatpipe an die Umgebung übertragen können, daß aber andererseits die unerwünschte Wärmeleitung längs der Außenseite der Heatpipe ganz erheblich reduziert wird.

Bei einer bevorzugten Ausführungsform ist vorgesehen, daß die Abschnitte der Wärmeabgabewand als Rohrstücke ausgebildet sind, zwischen denen Ringe aus einem Material mit schlechter Wärmeleitfähigkeit angeordnet sind.

Das Material mit schlechter Wärmeleitfähigkeit kann beispielsweise Keramik oder eine mit Fasern verstärkte Kunststoffmasse oder Kunststoff sein.

Die Unterteilung einer Heatpipe durch Einfügen eines elektrisch isolierenden Wandmaterials ist an sich bekannt (DE-U 7 224 356). Die Unterteilung dieser bekannten Heatpipe ist aber nur zur elektrischen Isolation der Endbereiche der Heatpipe vorgesehen, es ergibt sich dabei nicht eine Unterteilung der Wandbereiche in einem Schichtspeicher in eine größere Anzahl nebeneinander liegender, voneinander thermisch getrennter Abgabebereiche. Würde man die bekannte Heatpipe in einem Schichtspeicher einsetzen, wäre ein Heatpipewandbereich im Wärmeaufnahmebereich angeordnet, ein anderer Heatpipewärmebereich im Speicherbereich, es ergäbe sich aber im Speicherbereich keine Unterteilung, die gerade wichtig ist, um die Schichtstruktur im Speicher überhaupt erst zu ermöglichen. Würde die bekannte Heatpipe in einem Schichtspeicher eingesetzt, ergäbe sich in gleicher Weise wie bei konventionellen Heatpipes eine Entmischung im Wärmespeicher,

Bei Wärmetauschern ist es an sich bekannt, die Wärmeübertragungsmaterialien zwischen im Gegenstrom durchströmten Tauscherleitungen in Strömungsrichtung durch schlecht wärmeleitende Schichten thermisch voneinander zu trennen (DE-C 501 111). Diese Trennung erfolgt aber, um einen Wärmetausch in radialer Richtung zu gewährleisten und eine Verschleppung des Temperaturprofils parallel zur Strömungsrichtung der Wärme miteinander austauschenden Medien zu vermeiden. Die Probleme in einem Schichtspeicher sind mit den Problemen eines Wärmetauschers, der von einem strömenden in ein anderes strömendes Medium Wärme übertragen soll, nicht vergleichbar.

Bei Wärmetauschern dieser Art soll keine Schichtung in einem Speicher erreicht werden, sondern im Gegenteil eine möglichst gleichmäßige Wärmeübertragung zwischen zwei strömenden Medien.

Gemäß einer weiteren Lösung der gestellten Aufgabe ist bei einem Schichtwärmespeicher der eingangs beschriebenen Art vorgesehen, daß die Wärmeabgabewand aus schlecht wärmeleitendem Kunststoff besteht, dessen Wandstärke so gering ist, daß trotzdem in radialer Richtung ein wenig behinderter Wärmeübergang möglich ist.

Die nachfolgende Beschreibung einer bevorzugten Ausführungsform der Erfindung dient im Zusammenhang mit der Zeichnung der näheren Erläuterung. Es zeigen:

Fig. 1 eine Schnittansicht eines schematisch dargestellten Wärmespeicherbehälters mit in vertikaler Richtung in Abschnitte unterteilter Heatpipe und

Fig. 2 eine vergrößerte Schnittansicht der Heatpipe der Fig. 1.

Der in der Zeichnung dargestellte Wärmespeicher umfaßt einen allseits geschlossenen Behälter 1, der mit einem Wärmespeichermedium 2 gefüllt ist, beispielsweise mit Wasser. An seinem unteren Ende weist der Behälter 1 einen Zufluß 3 und an dem oberen Ende einen Abfluß 4 für das Wärmespeichermedium auf.

Durch den Boden 5 des Behälters 1 ragt eine rohrförmige Heatpipe 6 hindurch, die im wesentlichen aus einem verschlossenen Rohr aus einem gut wärmeleitfähigen Material besteht, beispielsweise aus Kupfer, und mit einem kondensierbaren Gas bestimmten Druckes so gefüllt ist, daß bei den gewünschten Temperaturen Kondensation bzw. Verdampfung erfolgt. Dieses Rohr ragt mit seinem anderen Ende in einen zweiten, unterhalb des ersten Behälters angeordneten Behälters 7, der ebenfalls mit einem flüssigen Wärmetauschermedium 8 gefüllt ist, welches über eine Zuleitung 10 in den Behälter 7 einfließt und durch eine Ableitung 9 den Behälter 7 wieder verläßt. Die Heatpipe 6 taucht mit ihrem unteren Ende in das Wärmetauschermedium 8 ein, in diesem Bereich ist die Heatpipe zur besseren Wärmeübertragung an der Außenseite mit Rippen 11 versehen.

Während in dem Behälter 7 die Heatpipe aus einem durchgehenden metallischen Rohr besteht, das mit den Rippen 11 wärmeleitend verbunden ist, beispielsweise durch Verschweißung, Lötung oder Schrumpfung, ist die Heatpipe in dem in den Behälter 1 eintretenden oberen Teil in einzelne Abschnitte 12 unterteilt, die jeweils durch Rohrstücke 13 aus einem gut wärmeleitenden Material gebildet sind, beispielsweise aus Kupfer. Diese Rohrstücke 13 sind durch Ringe 14 aus einem schlecht wärmeleitenden Material voneinander getrennt, diese Ringe können beispielsweise aus Keramik oder einem Faserverbundwerkstoff bestehen. Um Ringe und Rohrstücke miteinander zu verbinden, können an sich bekannte Techniken verwendet werden. Beispielsweise können Rohrstücke nach außen abstehende Flansche tragen, zwischen denen die Ringe 14 eingelegt sind. Die Flansche können mit den Ringen verschraubt sein, wobei nach Möglichkeit jede metallische Verbindung zwischen benachbarten Rohrstücken zu vermeiden ist, um keine Wärmeleitung zwischen benachbarten Rohrstücken hervorzurufen.

Es wäre auch möglich, die benachbarten Rohrstücke unter Zwischenlage der thermisch isolierenden Ringe mittels Druck- oder Zugankern gegeneinanderzuspannen, diese Zuganker könnten sich auch im Innern der Heatpipe befinden. Bei hoher mechanischer und thermischer Beanspruchung wäre auch das Einlöten oder Einschweißen stirnflächenseitig metallisierter Keramikringe oder -lochscheiben zwischen benachbarte Rohrstücke möglich.

Durch die Anordnung thermisch isolierender Zwischenlagen zwischen benachbarten Abschnitten der Heatpipe erhält man über die Höhe des Behälters verteilt mehrere Wärmeabgabeflächen, die zwischen sich eine schlechte Wärmeleitung aufweisen. Dadurch wird der unerwünschte Abbau der im Schichtspeicher erzeugten Temperaturdifferenz verhindert, das heißt, eine einmal erreichte Temperaturschichtung bleibt erhalten, obwohl sich die Heatpipe über eine größere Behälterhöhe erstreckt und Wärmeabgabewandflächen mit guter Wärmeleitfähigkeit aufweist.

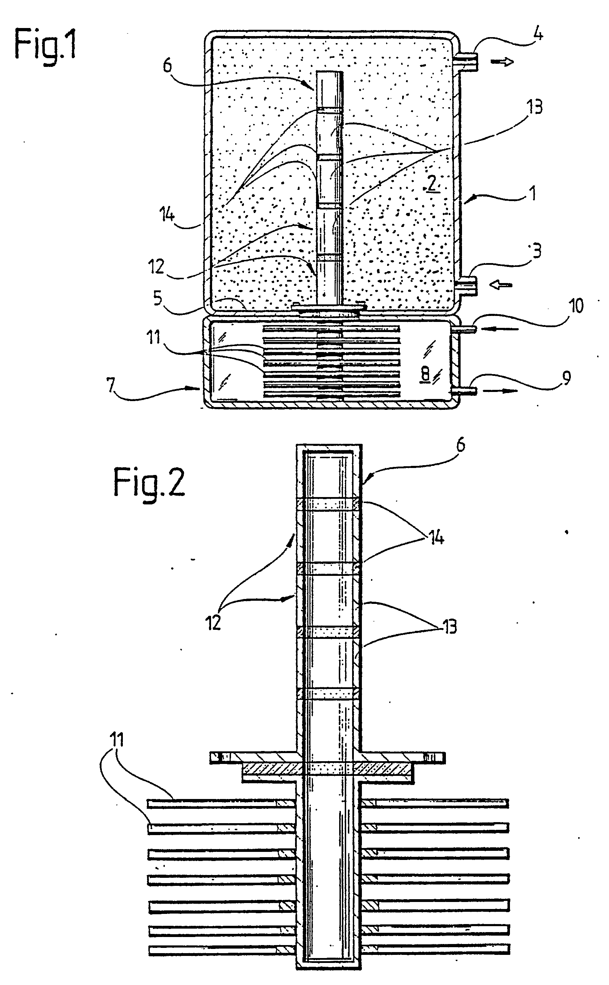

Bei einem anderen in der Zeichnung nicht dargestellten Ausführungsbeispiel ist die Heatpipe im Innern des Wärmespeichermediums selbst aus einem Material hergestellt, welches eine schlechte Wärmeleitfähigkeit aufweist, beispielsweise aus Kunststoffmaterial. Die Wandstärke wird dabei möglichst dünn gewählt, so daß trotz der Verwendung eines schlecht wärmeleitenden Materials auch in radialer Richtung noch ein wenig behinderter Wärmeübergang vom Wärmeträgermedium im Inneren der Heatpipe in das umgebende Wärmespeichermedium möglich ist. Andererseits verhindert ein solcher Aufbau Wärmetransport in vertikaler Richtung, so daß der unerwünschte Temperaturausgleich zwischen benachbarten Schichten weitgehend unterbunden wird. Der Gesamtaufbau einer solchen Anlage entspricht weitgehend der, die in den Figuren 1 und 2 dargestellt ist, selbstverständlich sind dann keine Unterteilungen in gut wärmeleitende und schlecht wärmeleitende Abschnitte notwendig, da die Wand der Heatpipe im gesamten Bereich der Wärmeabgabefläche aus schlecht wärmeleitendem Material besteht.

Selbstverständlich kann das untere Ende der Heatpipe auch in anderer Weise aufgeheizt werden als es im Ausführungsbeispiel dargestellt ist, hier sind dem Fachmann verschiedene Möglichkeiten an die Hand gegeben. Die Wirkungsweise einer Heatpipe ist an sich bekannt und wird daher nicht ausführlich erörtert. Ihr Prinzip beruht im wesentlichen darauf, daß ein im Inneren der Heatpipe angeordnetes Wärmeträgermedium im unteren Teil durch Erhitzen verdampft wird, in den oberen Teil aufsteigt und dort durch Kondensation an den Wärmeabgabeflächen Wärme an die Umgebung abgibt. Nach dem Herabfließen des nunmehr flüssigen Wärmeträgermediums in den unteren Teil beginnt der Kreislauf des Wärmeträgermediums erneut.

## Patentansprüche

1. Schichtwärmespeicher mit einem Behälter, der eine Zuleitung und eine Ableitung für ein flüssiges Wärmespeichermedium aufweist und mit mindestens einer in den Behälter hineinragenden Heatpipe ausgerüstet ist, deren Wärmeabgabewand sich mindestens über einen Teil der Behälterhöhe erstreckt und dadurch mehrere Temperaturschichten durchsetzt, dadurch gekennzeichnet, daß die Wärmeabgabewand der Heatpipe aus Material mit guter Wärmeleitfähigkeit besteht und durch Material mit schlechter Wärmeleitfähigkeit (Ringe 14) in mehrere Abschnitte (12) unterteilt ist, die im Behälter (1) auf unterschiedlicher Höhe angeordnet sind.

2. Schichtwärmespeicher nach Anspruch 1, dadurch gekennzeichnet, daß die Abschnitte (12) der Wärmeabgabewand als Rohrstücke (13) ausgebildet sind, zwischen denen Ringe (14) aus einem Material mit schlechter Wärmeleitfähigkeit angeordnet sind.

3. Schichtwärmespeicher nach Anspruch 1 oder 2, dadurch gekennzeichnet, daß das Material mit schlechter Wärmeleitfähigkeit Keramik, Kunststoff oder eine mit Fasern verstärkte Kunststoffmasse ist.

4. Schichtwärmespeicher mit einem Behälter, der eine Zuleitung und eine Ableitung für ein flüssiges Wärmespeichermedium aufweist und mit mindestens einer in den Behälter hineinragenden Heatpipe ausgerüstet ist, deren Wärmeabgabewand sich mindestens über einen Teil der Behälterhöhe erstreckt und dadurch mehrere Temperaturschichten durchsetzt, dadurch gekennzeichnet, daß die Wärmeabgabewand aus schlecht wärmeleitendem Kunststoff besteht, dessen Wandstärke so gering ist, daß trotzdem in radialer Richtung ein wenig behinderter Wärmeübergang möglich ist.

## Claims

1. Layered heat storer comprising a tank having a supply line and a discharge line for a fluid heat storage medium and equipped with at least one heat pipe projecting into said tank, the heat discharging wall of said heat pipe extending at least through a portion of the tank height and thereby penetrating a plurality of temperature layers, characterized in that said heat discharging wall of said heat pipe consists of a material having good heat conductivity and is divided into a plurality of sections (12) by material having poor heat conductivity (rings 14), said sections being arranged in said tank (1) at different levels.

2. Layered heat storer as defined in claim 1, characterized in that said sections (12) of said heat discharging wall are designed as tube members (13) having arranged between them rings (14) consisting of a material having poor heat conductivity.

3. Layered heat storer as defined in claim 1 or 2, characterized in that said material having poor heat conductivity is ceramics, plastic or a plastic mass reinforced with fibers.

4. Layered heat storer comprising a tank having a supply line and a discharge line for a fluid heat storage medium and equipped with at least one heat pipe projecting into said tank, the heat discharging wall of said heat pipe extending at least through a portion of the tank height and thereby penetrating a plurality of temperature layers, characterized in that said heat discharging wall consists of a plastic having poor heat conductivity and the thickness of said wall is so slight that heat transfer is still possible in radial direction with little hindrance.

## Revendications

1. Accumulateur de chaleur par couches comportant un récipient qui présente une conduite d'arrivée et une conduite de départ pour un médium liquide accumulateur de chaleur et qui est équipé d'au moins un caloduc qui pénètre dans le récipient et dont la paroi émettrice de chaleur s'étend au moins sur une partie de la hauteur du récipient et traverse donc plusieurs couches de température, caractérisé par le fait que la paroi émettrice de chaleur du caloduc est constituée d'un matériau de bonne conductibilité thermique et partagée, par un matériau de mauvaise conductibilité thermique (bagues 14), en plusieurs tronçons (12) qui sont disposés dans le récipient (1) à hauteur différente.

2. Accumulateur de chaleur par couches selon la revendication 1, caractérisé par le fait que les tronçons (12) de la paroi émettrice de chaleur sont conçus sous forme d'éléments tubulaires (13) entre lesquels sont disposées des bagues (14) d'un matériau de mauvaise conductibilité thermique.

3. Accumulateur de chaleur par couches selon la revendication 1 ou 2, caractérisé par le fait que le matériau de mauvaise conductibilité thermique est de la céramique, du plastique ou une masse plastique armée de fibres.

4. Accumulateur de chaleur par couches comportant un récipient qui présente une conduite d'arrivée et une conduite de départ pour un médium liquide accumulateur de chaleur et qui est équipé d'au moins un caloduc qui pénètre dans le récipient et dont la paroi émettrice de chaleur s'étend au moins sur une partie de la hauteur du récipient et traverse donc plusieurs couches de température, caractérisé par le fait que la paroi émettrice de chaleur est constituée d'un matériau plastique mauvais conducteur de la chaleur dont l'épaisseur de paroi est suffisamment faible pour que néanmoins une transmission thermique peu gênée soit possible en direction radiale.

Fig.1

Fig.2